# EUROPEAN PATENT APPLICATION

(11) **EP 4 717 331 A1**
(43) Date of publication of application: **01.04.2026**
(21) Application number: 25182136.9
(22) Date of filing: 11.06.2025
(51) Int. Cl.: A63B 59/48, A63B 60/06, A63B 60/46, A63B 24/00, A63B 71/06, A63B 102/08, G09B 19/00

(54) **SPORTS DEVICE AND RELATED PERFORMANCE ANALYSIS METHOD**

(30) Priority: 27.09.2024 IT 202400021502
(71) Applicant: Tenax Sport S.r.l., 43121 Parma (PR) (IT)
(72) Inventor: VALERIANI, Davide, 43121 PARMA (PR) (IT); BOSI, Marco, 43121 PARMA (PR) (IT); BIANCHI, Manuel, 43121 PARMA (PR) (IT)
(74) Representative: Silva, Valentina

(57) **Abstract**

A sports device (100), preferably a padel racket (100), comprising a handle (110) to hold said sports device (100), a hitting head (120) to hit a ball, said hitting head (120) being mechanically connected with an end of said handle (110), and extending in continuity with said handle (110) preferably along a first axis (Y) and along a second axis (X) orthogonal to the first one, said device (100) comprising detection means (150), to detect data relating to the use of the device (100) by a player, and comprises a data processing module (160) built-in in the sports device (100), which receives the data detected by the detection means (150), processes them and/or sends them to an outer processing device (200) configured to further process said data and to provide information on how the sports device (100) is used.

## Description

### FIELD OF APPLICATION OF THE INVENTION

The present invention falls within the field of sports equipment. In particular, the present invention relates to a sports device, adapted to be held by a player to hit a ball, for example, a padel racket, or a tennis racket, or golf club, etc.

### STATE OF THE ART

The use of sports devices, such as golf clubs, tennis rackets, padel rackets, and other ones that are provided with sensors for the analysis of some movements performed by said devices is known in the art.

Attempts aimed at integrating various types of control instruments have been made, but without paying proper attention to avoiding alterations to the device's functionality during play.

Furthermore, said control instruments allow obtaining only limited information on the use of the device.

In fact, today the golf, tennis, or padel player, in order to improve his/her performance and technique, has to rely on a specialist coach who, through visual observation of the player's movements, is able to provide corrections to generate an improvement in the play.

The popularity that padel has gained in recent years, both at amateur and professional levels, has led, also in this sport, to make increasingly advanced equipment.

With the growing popularity of padel, the demand for advanced technological solutions for performance analysis is also increasing.

Currently, game analysis is mainly based on visual observations and statistics carried out with the aid of a specialist coach or trainer. Therefore, this monitoring does not occur continuously, but according to the timing and methods of the coach.

In recent years, there have been attempts to integrate various types of instruments into padel rackets, but this has been done without proper attention to avoid altering the functionality of the device and only limited information on the use of the device has been obtained.

An example is a padel racket including a sensor adapted to acquire information related to the different types of strokes or hits performed with the padel racket during the practice of this sport.

Main problem of this invention is the fact that such sensor is housed inside a cavity that is located inside the member of the racket that interfaces with the ball, i.e., the head. This solution can significantly affect the balance and stability of the racket itself, thus leading to a major drawback during a match, since even a few grams can change its manoeuvrability, in addition to the risk of damaging the inertial sensor itself due to the continuous impacts the racket head suffers from the game ball and from collisions against the mesh and glass walls of the court during the several uses.

Moreover, the piece of information provided by said inertial sensor is limited and cannot offer insights that could help the player monitor and improve his/her technique.

### DISCLOSURE AND ADVANTAGES OF THE INVENTION

Therefore, the problem underlying the present invention is to provide to the art a sports device and related performance analysis method devised to at least partially obviate one or more of the drawbacks felt with reference to the mentioned prior art.

Within the scope of the above-mentioned problem, one of the main objects of the invention is to provide a sports device and related performance analysis method in which it is possible to detect and collect data regarding the use of the sports device, and to analyse them.

In particular, the invention is able to carry out a real-time analysis of said collected data. The device that is the subject matter of the invention is able to provide the user also a real-time feedback that signals any mistakes and allows quick correction during the match.

Further object of the invention is to provide a sports device and related performance analysis method, wherein the data are detected and processed by means that do not affect the balance and stability of the sports device itself and therefore do not compromise the use of the sports device and do not cause a major drawback during the course of a match.

Through data collection, in fact, it is possible to obtain a quantity and quality of information that a coach could not have by simply observing the movement.

This allows providing objective rather than subjective data, which depend on the coach's ability to detect.

This also allows working on small corrections of the movements, which, however, could lead to a significant improvement in the impact on the ball.

Furthermore, by virtue of this invention, the sports device becomes a virtual coach that supports the player throughout his/her sports journey, guiding and improving his/her play.

Therefore, object of the invention is also to provide to the art a sports device and related performance analysis method, which allows the player to assess his/her mistakes, and understand which movements to correct and improve, without constantly needing the assistance of the coach.

Additionally, object of the invention is also to provide to the field a sports device and related performance analysis method, which allows comparing the collected data to data relating to an optimal reference movement.

The analysis provides accurate and customized feedback, which is crucial for trainers and athletes seeking to refine their technical skills, in real time.

The analysis occurs in real time rather than retrospectively, to provide immediate feedback.

By virtue of this system, it is possible to develop specific, targeted training programs, based on corrective customized exercises to correct identified technical flaws.

Furthermore, object of the invention is to track and analyse progresses over time.

This makes the sports device a crucial tool for a scientifically advanced training and for improving athletic performance, increasing both the competitiveness and effectiveness of training sessions at all levels of play.

In particular, the invention provides a sports device, comprising a handle to hold said sports device, and a hitting head to hit a ball.

Preferably, said hitting head is mechanically connected with an end of said handle, and extends in continuity with said handle.

Preferably, the hitting head extends along a first axis in continuity with said handle, and along a second axis orthogonal to the first one.

Said device is preferably a padel racket.

Advantageously, said device comprises detection means, to detect data relating to the use of the device by a player.

The sports device preferably comprises a data processing module built-in in the sports device.

Advantageously, said processing module receives the data detected by the detection means, processes them, and/or sends them to an outer processing device configured to further process said data and to provide information on how the sports device is used.

Advantageously, the detection means are built-in in the handle and/or in the hitting head.

According to a preferred aspect, the data processing module is installed inside the handle.

The sports device preferably comprises a wireless communication module to transmit the data from the data processing module to the outer processing device.

The detection means optionally comprise at least one proximity sensor to detect whether the device is held by the player and preferably to activate the data processing module and/or the wireless communication module.

Said proximity sensor is preferably built-in in the handle.

A preferred embodiment provides for the detection means to comprise an accelerometer, in order to detect the acceleration changes of the padel racket, preferably installed inside the handle and arranged so as to perform the measurement at least along at least the first axis and/or the second axis, and/or a third axis orthogonal to the preceding axes.

Advantageously, the detection means comprise three accelerometers preferably installed inside the handle and arranged so as to perform the measurement along the first axis, along the second axis, and even along the third axis, respectively.

Preferably, the detection means comprise a rotating gyroscope, to detect the orientation and the angular velocity of the sports device, preferably installed inside the handle and arranged so as to perform the measurement at least along at least the first axis, and/or the second axis, and/or the third axis.

Advantageously, the detection means comprise three rotating gyroscopes preferably installed inside the handle and arranged so as to perform the measurement along the first axis, along the second axis, and even along the third axis, respectively.

Preferably, the detection means comprise at least one pressure sensor, preferably at least four, to detect the impact point and the pressure changes exerted during the strokes of the sports device, each pressure sensor being installed in the hitting head, preferably being positioned between two flat surfaces of the hitting head.

The detection means optionally comprise at least one pressure sensor built-in in the handle, to detect the force with which the player grips the handle.

Advantageously, the detection means comprise a compass, to detect the orientation of the sports device, preferably installed inside the handle.

The sports device preferably comprises a battery, preferably built-in in the handle, which supplies energy to the detection means and/or to the data processing module and/or to the wireless communication module for the operation thereof.

The sports device preferably comprises a feedback module preferably built-in in the handle, configured to generate a feedback preferably of a tactile type, for example, a vibration.

Said feedback module is preferably electrically connected with the data processing module that processes the data detected by the detection means and transmits an electric signal to the feedback module in order to activate it.

The feedback module preferably comprises a motor energized by the battery.

Advantageously, the sports device comprises a connecting member, for example, a USB port, to recharge the battery and/or to transmit data from the data processing module to the outer processing device, and vice versa.

The connecting member is optionally positioned on the handle, preferably on an end portion, even wirelessly.

Advantageously, the sports device comprises a memory device, for example, a flash or solid-state memory.

Said memory is preferably built-in in the data processing module which allows a temporary storage of the data pending transmission to the outer processing device.

Advantageously, the sports device is made of composite materials, for example, reinforced carbon fibers to maximize the resistance and reactivity of the sports device.

Object of the invention is also the operative method of a sports device, preferably a padel racket, which, by a data processing module, provides for:
- collecting, preferably in real time, data detected by detection means for a preset time interval during the use of the sports device by a player,
- preferably, cleaning the detected data, i.e., improving the quality of the detected data by amplifying the signal and reducing noise,
- transferring the data to an outer processing device,
- processing, preferably in real time, said data to provide information on how the sports device is used,
- preferably, providing instant feedback.

Advantageously, the method provides for identifying key parameters, preferably velocity, and/or angle, and/or impact of the sports device, and preferably which provides for comparing said obtained parameters to those of an ideal reference movement, for example, performed by an expert, which is used as a benchmark.

The method preferably provides, by a proximity sensor, for detecting whether the sports device is held by a player and, in such a case, for activating the steps of collecting the data, and/or cleaning the data, and/or transferring the data.

Advantageously, the method provides for processing said data preferably in real time, by an algorithm designed to interpret the movement patterns, distinguishing various types of strokes and providing accurate estimates of the power and precision of each stroke.

The method optionally provides for providing, preferably in real time, to the player, who holds the handle, feedback associated with the recognized movement, said feedback preferably being of a tactile type, for example, by a vibration of the handle.

Such and other objects are achieved by virtue of the characteristics of the invention set forth in the independent claims. The dependent claims outline preferred and/or particularly advantageous aspects of the invention.

In particular, the present invention provides a sports device and related performance analysis method.

### BRIEF DESCRIPTION OF THE FIGURES

The features and advantages of the invention will become more apparent from the detailed description of preferred embodiments provided by way of illustrative, non-limiting example, with reference to the attached drawings, in which:
- Fig. 1 depicts a plan view of a sports device, in particular a padel racket, according to the invention, connected with an outer device;
- Fig. 2 depicts a side view of a sports device, in particular a padel racket, according to the invention.

### DESCRIPTION OF THE INVENTION

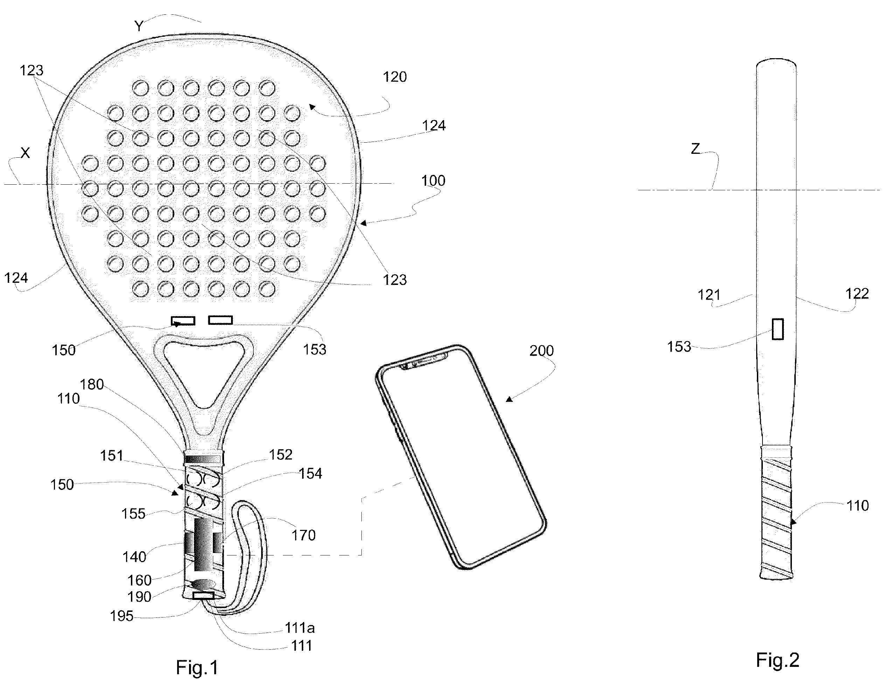

With initial reference to Fig. 1, a sports device, in particular a padel racket, is overall referred to with by reference number 100.

By the term sports device 100 is meant a sporting instrument with a handle and a hitting head to hit a ball.

For example, the sports device 100 is a padel racket, or a tennis racket, or a golf club, etc.

Hereinbelow, and in the attached tables, for simplicity, reference will always be made to a sports device 100, which is a padel racket 100, without this being limiting to the invention.

Therefore, we will often use the term racket 100 instead of device 100.

Said padel racket 100 preferably comprises a handle 110 in order to hold it.

Furthermore, said padel racket 100 preferably comprises a hitting head 120 to hit the ball.

Said hitting head 120 is mechanically connected with the handle 110 and is preferably connected with an end of said handle 110.

According to an aspect of the invention, the hitting head 120 has a planar configuration that extends along a first axis Y and a second axis X orthogonal to the first axis Y.

The shape of the hitting head 120 can be of various types. For example, there are rackets 100 which are mainly divided into three models: with a diamond-shaped head 120, or with a round head 120, or with a teardrop-shaped head 120.

Each of these models has distinctly different characteristics concerning the effect on the ball, velocity, explosiveness, and power.

It has to be pointed out that each shape involves a different position of the centre of mass and a different balance point, which characterize the stability and manoeuvrability of the racket 100.

Details of the individual shapes, all of which are within the protection scope of the invention, will not be discussed herein, and the features described below apply to all the types of padel racket 100.

Said hitting head 120 extends in continuity with said handle 110, along said first axis Y.

Preferably, the hitting head 120 comprises two flat surfaces 121, 122 opposite and overlapping according to a third axis Z orthogonal to the second axis X and the first axis Y.

According to a preferred embodiment, such padel racket 100 comprises detection means 150, to detect data relating to the use of the padel racket 100 by a player.

Advantageously, the detection means 150 are positioned at strategic points to maximize the accuracy and significancy of the collected data.

Advantageously, the detection means 150 are positioned at strategic points that do not affect the balance and stability of the racket 100.

A preferred aspect provides for the detection means 150 to be built-in in the handle 110.

By virtue of this solution, it is possible to maximize the coverage of the collected data without negatively affecting the balance or weight of the racket 100.

In fact, in a padel racket 100, even a few grams can change the manoeuvrability of the racket 100.

Besides the weight, balance is particularly important; in fact, additional weight in the upper part, namely in the hitting head 120, affects balance much more than in the lower part, namely in the handle 110.

Hence, a particularly advantageous position to insert the detection means 150 is the handle 110, which, being the point where the racket 100 is gripped, does not affect the playability of the racket 100.

Furthermore, the fact that the detection means 150 are built into the handle 110 makes them more protected and less exposed to impacts, as instead happens with the racket head 120.

In order to optimize the data detection, it is possible that some detection means 150 are installed/built-in in the hitting head 120, preferably between the two flat surfaces 121, 122.

Preferably, the detection means 150 are of the multi-axial and/or multimodal type and will be described in more detail herein below.

A preferred embodiment provides for the racket 100 to further comprise a data processing module 160 built-in in the racket 100, which receives the data detected by the detection means 150.

Said data processing module 160 can improve the quality of the data received by the detection means 150, amplifying the signal and reducing noise.

Also, in order not to affect the playability of the racket 100, the data processing module 160 can be installed inside the handle 110.

The data processing module 160 preferably sends the detected data to an outer processing device 200.

Said data processing module 160 can directly process the data received from the detection means 150, and preferably in real time.

These data processed by the data processing module 160 can provide instant feedback to the player, as better described below, and/or be transferred to the outer processing device 200.

The analysis occurs in real time, not afterward, in order to provide instantaneous feedback.

It is also possible that the data processing module 160 transfers the data received from the detection means 150 to the outer processing device 200, which processes them, and preferably in real time.

Preferably in real time, it is also possible that part of the data received from the detection means 150 is processed by the data processing module 160, and part by the outer processing device 200.

By means of said outer processing device 200 and/or by the data processing module 160, the data detected by the detection means 150 are processed through an advanced algorithm executed on an energy-efficient microcontroller.

In particular, this algorithm is preferably designed to:
- interpret the movement patterns,
- differentiate the various types of strokes,
- provide data on the power of each stroke,
- provide data on the precision of each stroke.

Said outer processing device 200 and said data processing module 160 can process the data obtained from the detection means 150 differently, providing analyses on different aspects.

The outer processing device 200 can be a computer, or a smartphone on which a dedicated application using the aforementioned algorithm is installed.

The padel racket 100 may also comprise a wireless communication module 170 to transmit the data from the data processing module 160 to the outer processing device 200.

By virtue of this solution, it is possible to always be connected with the processing device to perform a continuous real-time data transmission, without needing physical connections that make the data transfer intermittent.

Said wireless communication module 170 is preferably designed for an efficient and low-power transmission of the data acquired by the detection means 150 and processed by the processing module 160 verso the outer processing devices 200.

Such wireless communication module 170 can be, e.g., of a Bluetooth 5.0 type.

According to preferred embodiments, the wireless communication module 170 is built into the handle 110 to increase the protection from impacts, and to be invisible to the user.

Advantageously, the padel racket 100 may comprise a battery 190, to supply power to the detection means 150 and/or to the wireless communication module 170 and/or to the data processing module 160 for the operation thereof.

The battery 190 is preferably built-in in the handle 110.

To recharge the battery 190, the racket 100 may comprise a connecting member 195, for example, a USB port. This allows recharging the battery 190 by a wired connection when the racket is not in use.

Said connecting member 195 can also be a member configured for a wireless-type connection, preferably installed in the handle.

This allows recharging the battery 190 through a wireless connection.

A monitoring system for the charge of the battery 190 may be present.

Such connecting member 195 may also be used to transmit the data from the data processing module 160 to the outer processing device 200, and vice versa. This can be useful when the wireless communication module 170 is absent or not functioning.

To optimize the balance of the racket, the connecting member 195 is positioned on the handle.

To avoid creating discontinuities on the handle 110 that could interfere with the grip of the racket 100, the connecting member 195 is preferably positioned on a terminal portion 111 and, further preferably, on the terminal face 111a.

Advantageous implementations provide for the padel racket 100 to comprise a memory device 140.

Such memory device 140 can be, for example, a flash or solid-state memory, preferably built-in in the data processing module 160.

By virtue of this memory device 140, a temporary storage of the data pending transmission to the outer processing device 200 is possible.

An embodiment of the racket 100 is shown herein below, wherein the number and type of the detection means 150 is particularly advantageous to achieve a complete and functional detection.

Such detection means 150 comprise at least one proximity sensor 155 built-in in the handle 110.

By virtue of the proximity sensor 155, it is possible to detect whether the racket 100 is held by the player.

Once this information is received, it is possible to activate the data processing module 160 and/or the wireless communication module 170.

This allows automatically activating the data detection and/or collection and/or transfer without pressing any buttons, simply by holding the handle 110 of the racket 100.

Otherwise, i.e., if the racket 100 is not held by the player, the system goes into a power-saving mode to preserve its battery.

The detection means 150 may comprise an accelerometer 151, to detect the acceleration changes of the padel racket 100.

The accelerometer 151 is installed inside the handle 110.

It is preferably positioned inside the handle 110 to capture the movements of the racket 100, and further to increase the protection from impacts, and to be invisible to the user.

The accelerometer 151 is advantageously arranged so as to perform the measurement at least along at least the first axis Y, and/or the second axis X, and/or the third axis Z.

The accelerometer 151 is a sensor that is designed to detect even the smallest variations in acceleration, allowing a detailed analysis of the velocity and impact force.

In a preferred embodiment, the detection means 150 comprise three accelerometers 151.

These three accelerometers 151 are installed inside the handle 110 and are arranged so as to perform the measurement along both the first axis Y and the second axis X, as well as along the third axis Z, respectively.

This number and positioning of the accelerometers 151 allows achieving a complete detection relative to each rotational axis of the racket 100.

The detection means 150 may comprise a rotating gyroscope 152.

The gyroscope 152 is a sensor adapted to detect the orientation and angular velocity of the padel racket 100.

The gyroscope 152 generally consists of a toroidal-shaped rotor that spins about its axis. When the rotor is rotating, its axis tends to remain parallel to itself and to resist any attempt to change its orientation due to the law of conservation of angular momentum.

These gyroscopes 152 are highly sensitive instruments and are adapted to monitor the position of the racket 100 in space and to precisely determine the type of stroke performed.

The gyroscope 152 is installed inside the handle 110.

The gyroscope 152 is positioned inside the handle 110 to capture the movements of the racket 100, and further to increase the protection from impacts, and to be invisible to the user.

The gyroscope 152 is arranged so as to perform the measurement at least along at least the first axis Y, and/or the second axis X, and/or a third axis Z.

In a preferred embodiment, the detection means 150 comprise three rotating gyroscopes 152 installed inside the handle 110 and arranged so as to perform the measurement along both the first axis Y, and the second axis X, as well as along the third axis Z, respectively.

This number and positioning of the gyroscopes 152 allows achieving a complete detection relative to each rotational axis of the racket 100.

According to advantageous embodiments, the detection means 150 comprise at least one pressure sensor 153.

The pressure sensor 153 is a sensor that detects the impact point and the pressure changes exerted during the strokes.

These data are converted into electrical signals that, through processing algorithms, allow precisely determining the position and power of each stroke, thus optimizing the performance analysis.

Preferably, the detection means 150 comprise at least four pressure sensors 153.

In particular, each pressure sensor 153 is installed in the hitting head 120.

For example, the pressure sensors 153 can be positioned between the two flat surfaces 121, 122 of the hitting head 120.

For example, the pressure sensors 153 can be positioned at a central zone 123 of the flat surfaces and/or in a perimetral zone 124.

This also allows detecting when the stroke is not performed at the centre, but in the proximity of the edges of the racket 100.

Advantageously, the detection means 150 may comprise at least one pressure sensor 153 built-in in the handle 110.

In such a case, the pressure sensor 153 is built-in in the handle because it has to detect the force with which the player grips the racket 100, in particular to detect the force with which the player grips the handle 110.

These data are used to monitor the grip and teach the player how to optimize it with each stroke.

In order to complete the detection, the detection means 150 may comprise a compass 154.

In particular, the compass 154 is adapted to identify the magnetic north and allows identifying the orientation of the padel racket 100.

Preferably, the compass 154 is installed inside the handle 110.

According to an aspect of the invention, the padel racket 100 comprises a feedback module 180.

Such feedback module 180 is configured to provide to the player, who holds the handle 110, a piece of information, preferably of a tactile type, for example, a vibration in response to a specific detection by the detection means 150.

The feedback module 180 generally comprises a motor energized by the battery 190. Preferably, the feedback module 180 built-in in the handle 110, to allow the player easily detecting the vibration.

In particular, in response to a specific detection by the detection means 150, the data processing module 160 generates an electrical signal that activates the feedback module 180, which, in turn, generates a signal, e.g., of a tactile type, such as a vibration, in particular of the handle 110.

According to an aspect of the invention, the feedback module 180 is directly activated by the processing module 160 that processes the data without passing through the outer device 200.

This allows for a faster provision of the information, which must be as instantaneous as possible to enable the player to understand and correct his/her mistake.

In order to optimize resistance and reactivity, said padel racket 100 is preferably made of composite materials, for example, reinforced carbon fibers or advanced composite materials.

These materials also allow di optimize the weight of the racket 100 in response to the insertion of all the devices for the detection, collection, and transmission of the data.

Object of the invention is also the operational method of the padel racket 100.

Such method advantageously provides for:
- collecting, by the processing module 160, the data detected by the detection means 150 for a preset time interval during the use of the padel racket 100 by a player,
- preferably cleaning the detected data, i.e., improving the quality of the detected data by amplifying the signal and reducing noise,
- transferring the data to an outer processing device 200
- processing, by the processing module 160 and/or by the outer processing device 200 said data to provide information on how the racket 100 is used

- preferably, activating the feedback module 180 by the processing operations of the processing module 160 to provide the player with a tactile stimulus.

All these steps preferably occur in real time and preferably continuously.

Following data processing, said method advantageously provides, preferably in real time, feedback associated with the recognized movement to support the player in understanding the movement to be performed, said feedback being preferably of a tactile type, such as a vibration of the handle 110.

The data detection time interval is preferably about 1 second.

Preferably, the data cleaning occurs via a band-pass filtering.

The step of cleaning the detected data, i.e., improving the quality of the detected data by amplifying the signal and reducing noise, may not be necessary if the detection means 150 comprise highly performing sensors capable of carrying out cleaner measurements.

Preferably, the method provides a temporary storage of the pending transmission to the outer processing device 200.

Such method may provide, by a proximity sensor 155, for detecting whether the racket 100 is held by a player and, in such a case, for activating the steps of collecting the data, cleaning the data, and transferring the data.

Preferably, the method provides that, by means of the detection means 150, the padel racket 100 detects detailed data on the player's movements when he/she holds it during the sporting activity; these data are collected via the processing module 160, respectively, and communicated to outer devices 200 by the wireless communication module 170.

Said data are thus processed, to be subsequently subjected to analysis and interpretation operations, preferably performed by a dedicated algorithm installed on the outer device 200.

The method provides that the processed data are analysed by the algorithm to identify key parameters, such as the velocity with which a play movement is performed, the position of the hand relative to the padel racket 100, the angle of the latter, the force and precision with which the sports ball is impacted.

This allows detailed monitoring of the player's movement dynamics and technique.

The method also provides to compare the obtained parameters to those of an ideal reference movement, for example, performed by an expert, which is used as a benchmark.

By means of such comparison, the method provides to highlight the discrepancies between the movements performed by the player and those of the same benchmark, providing accurate insights into the areas of improvement to focus on.

The method also provides to save and store in the memory device 140 information on the performed movement.

In fact, the method provides, by the algorithm, to offer personalized suggestions to optimize technique, supporting the player with targeted exercises intended to develop specific training programs to correct the identified flaws, enabling continuous comparison and feedback, allowing a progressive and sustainable improvement of the athlete's performance.

Advantageously, the method may provide, by the algorithm, to interpret the movement patterns, distinguishing them and providing accurate estimates of the power and the precision thereof.

The method provides, by means of such algorithm, to automatically recognize, categorize, and store within a database the different types of movements performed by the player during a match, such as the forehand from the baseline, the backhand from the baseline, the forehand volley, the backhand volley, the bandeja, the vibora, the smash, the chiquita, the lob, and the glass exit, based on specific technical parameters unique to each of the individual movements mentioned.

Once the type of stroke performed has been identified, the method provides for comparing the execution to that of a benchmark stroke performed by a coach, providing a detailed analysis and customized feedback preferably by, for example, a tactile feedback.

This allows improving the player's technique by enabling a precise identification of the improvement areas for each specific type of movement, promoting a targeted and highly efficient training.

Said method preferably provides for making the detected and/or processed information visible through an intuitive and highly functional user graphic interface, designed to facilitate interaction and interpretation of the collected data.

Said graphic interface displays in real time the key metrics of the player's movements, including the velocities at which said movements are performed, the angle of the padel racket 100 during the latter, the force and precision with which the sports ball is impacted. Advanced functionalities allow displaying detailed comparisons to the ideal movement model, highlighting the differences, and suggesting specific technical corrections, thus permitting to create customized profiles for each player, tracking the progresses, and adapting the training programs to the individual needs of each athlete, offering statistical analysis and detailed reporting tools, useful for monitoring performance and improvements over time.

In another aspect, said method provides for advanced safety measures to ensure the protection and privacy of the acquired data.

These data are preferably encrypted both during the transmission step and during the storing step, preventing unauthorized accesses. The method allows users to control and manage their personal data, also implementing strict authentication protocols to ensure that only authorized users are able to access the existing information.

These measures ensure a safe environment for data analysis and storage, protecting the confidentiality and integrity of the player's information.

The invention is advantageously designed to be compatible and integrable with other existing technologies in the sports industry, such as video tracking systems and biomechanics analysis platforms, with mobile devices and the Cloud ensuring accessibility and data sharing, thus making the whole system an essential support to improve the players' training and performance.

The method advantageously provides for the algorithm to be easily updatable, preferably wirelessly, allowing the introduction of new features and improvements based on the users' feedback and the technological developments, so as to achieve a constantly updated version of the racket.

This allows, for example, a continuous updating of algorithms for reducing noise in the acquired data, enabling the collection of higher-quality data, as well as the development of new modes for transforming such data to allow the recognition of movements and additional actions.

This invention represents an advanced integration of technology and sport, offering athletes an unprecedented understanding of their performance, since currently game analysis is mainly based on manual observations and statistics.

The applications thereof could extend well beyond the field of padel, influencing the entire sports sector -for example, tennis, padel, golf, etc.- as the ability to track and analyse progresses over time offers a significant advantage, making this device an indispensable tool for a scientifically advanced training and for improving sports performance, increasing competitiveness, enhancing technique, strategy, prevention of injuries, and the effectiveness of the training sessions at all levels of play.

## Claims

1. A sports device (100), preferably a padel racket (100), comprising a handle (110) to hold said sports device (100), a hitting head (120) to hit a ball, said hitting head (120) being mechanically connected with an end of said handle (110), and extending in continuity with said handle (110), preferably along a first axis (Y) and along a second axis (X) orthogonal to the first one, **characterized in that** it comprises detection means (150), to detect data relating to the use of the device (100) by a player and **in that** it comprises a data processing module (160) built-in in the sports device (100), which receives the data detected by the detection means (150), processes them, and/or sends them to an outer processing device (200) configured to further process said data and to provide information on how the sports device (100) is used.

2. The sports device (100) according to the preceding claim, wherein the detection means (150) are built-in in the handle (110) and/or in the hitting head (120).

3. The sports device (100) according to any one of the preceding claims, wherein the data processing module (160) is installed inside the handle (120).

4. The sports device (100) according to any one of the preceding claims, which comprises a wireless communication module (170) to transmit the data from the data processing module (160) to the outer processing device (200).

5. The sports device (100) according to any one of the preceding claims, wherein the detection means (150) comprise at least one proximity sensor (155) built-in in the handle (110), to detect whether the device (100) is held by the player and activate the data processing module (160) and/or the wireless communication module (170).

6. The sports device (100) according to any one of the preceding claims, wherein the detection means (150) comprise an accelerometer (151), preferably three accelerometers (151), to detect the acceleration changes of the padel racket (100), installed inside the handle (110) and arranged so as to perform the measurement at least along at least the first axis (Y), and/or the second axis (X), and/or a third axis (Z) orthogonal to the preceding axes (X, Y).

7. The sports device (100) according to any one of the preceding claims, wherein the detection means (150) comprise a rotating gyroscope (152), preferably three rotating gyroscopes (152), to detect the orientation and the angular velocity of the sports device (100), installed inside the handle (110) and arranged so as to perform the measurement at least along at least the first axis (Y), and/or the second axis (X), and/or the third axis (Z).

8. The sports device (100) according to any one of the preceding claims, wherein the detection means (150) comprise at least one pressure sensor (153), preferably at least four, to detect the impact point and the pressure changes exerted during the strokes of the sports device (100), each pressure sensor (153) being installed in the hitting head (120), preferably being positioned between two flat surfaces (121, 122) of the hitting head (120).

9. The sports device (100) according to any one of the preceding claims, wherein the detection means (150) comprise a compass (154), to detect the orientation of the sports device (100), installed inside the handle (110).

10. The sports device (100) according to any one of the preceding claims, which comprises a feedback module (180) preferably built-in in the handle (110), and preferably comprising a motor energized by the battery (190), configured to generate a feedback preferably of a tactile type, for example, a vibration, said feedback module (180) being electrically connected with the data processing module (160) that processes the data detected by the detection means (150) and transmits an electric signal to the feedback module (180) in order to activate it.

11. Operation method of a sports device (100), preferably a padel racket (100), made according to claim 1, which, by a data processing module (160), provides for:
- collecting, preferably in real time, data detected by detection means (150) for a preset time interval during the use of the sports device (100) by a player,
- preferably cleaning the detected data, i.e., improving the quality of the detected data by amplifying the signal and reducing noise,
- transferring the data to an outer processing device (200),
- processing, preferably in real time, said data to provide information on how the sports device (100) is used,
- preferably, providing instant feedback.

12. The method according to claim 11, which provides for identifying key parameters, preferably velocity, and/or angle, and/or impact of the sports device, and preferably which provides for comparing said obtained parameters to those of an ideal reference movement, for example, performed by an expert, which is used as a benchmark.

13. The method according to any one of the claims 11 to 12, which provides, by a proximity sensor (155), for detecting whether the sports device (100) is held by a player and, in such a case, for activating the steps of collecting the data, and/or cleaning the data, and/or transferring the data.

14. The method according to any one of the claims 11 to 13, which provides for processing said data preferably in real time, by an algorithm designed to interpret the movement patterns, distinguishing various types of strokes and providing accurate estimates of the power and precision of each stroke.

15. The method according to any one of the claims 11 to 14, which provides for providing, preferably in real time, to the player, who holds the handle (110), a feedback associated with the recognized movement, said feedback preferably being of a tactile type, for example, by a vibration of the handle (110).
